# EUROPEAN PATENT SPECIFICATION

(11) **EP 3 124 879 B1**
(45) Date of publication and mention of the grant of the patent: **10.06.2020**
(21) Application number: 16181471.0
(22) Date of filing: 27.07.2016
(51) Int. Cl.: F24D 19/00

(54) **RADIATOR FAN UNIT**
KÜHLERLÜFTEREINHEIT
UNITÉ DE VENTILATEUR DE RADIATEUR

(30) Priority: 28.07.2015 GB 201513275
(43) Date of publication of application: 01.02.2017
(73) Proprietor: Webster, Gary Stanton, Chelmsford, Essex CM3 4EZ (GB)
(72) Inventor: Webster, Gary Stanton, Chelmsford, Essex CM3 4EZ (GB)
(74) Representative: Sandersons

(56) References cited:
- ES-A2- 2 073 340
- GB-A- 2 337 811
- GB-A- 2 492 346
- US-A- 3 324 938
- US-A- 4 126 268

## Description

This invention relates, in a first aspect thereof, to a modular fan unit adapted for mounting under a conventional radiator, in order to boost natural convection. In a second aspect, the invention also relates to a modified radiator having such a modular fan unit mounted thereunder. In a third aspect, the invention further relates to a method of modifying a conventional radiator by mounting such a modular fan unit. A modular fan unit according to the preamble of claim 1 and a method of modifying a conventional radiator by mounting such a modular fan unit thereunder according to the preamble of claim 15 are known from document GB 2337 811 A.

Known fan-assisted radiators consist of a heat exchanger fed by a central heating or hot water system, and an electric fan arranged to blow air over the heat exchanger. Operation of the fan is generally controlled by a built-in room temperature thermostat. Such systems are efficient at transferring heat from a building's water heating system to a room, even when the temperature of the water in the heating system is relatively low. As such, they are often referred to as low energy heating products.

Fan-assisted radiators enable a greater heat output to be achieved from a heating system operating at a set temperature than is the case with conventional radiators, which rely on natural convection currents. Conventional radiators have however remained popular, since they are considered by many to be more aesthetically pleasing. In addition, the majority of pre-existing installed central heating systems tend to be based around conventional radiators rather than fan-assisted radiators.

Conventional radiators suffer from the shortcoming that, because of their reliance on natural convection, they cannot efficiently transfer heat from a building's water heating system to a room when the water in the system is at a low temperature (below about 75°C). The central heating boiler must therefore be operated at a temperature higher than 75°C, which leads to increased running costs, decreased efficiency, and a greater drain on fuel resources.

In recent years, there has been a marked shift in the behaviour of consumers, who are ever more seeking environmentally benign, low energy domestic heating products. This is desirable from the point of view of economy and energy efficiency, as well as environmental considerations. However since, as noted above, most houses have a pre-existing installed central heating system based around conventional radiators, it is often impractical to change the entire system to use low energy fan-assisted radiators.

The present invention seeks to address the above issue by providing a modular fan unit adapted for mounting under a conventional radiator, thereby to enable boosting of natural convection. The consumer can thus obtain the benefits of a low energy system, including cost savings, increased energy efficiency and lessened environmental impact, without the upheaval or cost of a full installation. The present invention further seeks to provide such a modular fan unit which can be easily installed on a DIY basis, without the need for a plumber or electrician, or any specialist skill or knowledge.

According to a first aspect of the present invention there is provided a modular fan unit according to claim 1.

The modular fan unit of the present invention is adapted for mounting under a conventional radiator selected from a single radiator having a first panel, a double radiator having first and second panels, and a treble radiator having first, second and third panels. Each said single, double and treble radiators may be either with or without fins. Each said panel has a front face, and a rear face, and comprises a top water header, a bottom water header and vertical water ways.

The LTC sensor preferably comprises a thermistor.

The fan unit of the invention further comprises control means arranged to operate the fan. The control means comprises a LTC over-ride switch provided on the housing and adapted to enable operation of the fan when water temperature in the panel is below the pre-determined value. The control means preferably comprises a multi-speed selector switch provided on the housing and adapted to enable operation of the fan at one or more speeds. The multi-speed selector switch may be designated as a "boost" switch, with the higher speed setting(s) being intended as the "boost" function to provide quick build-up of heat when the unit is first switched on. The multi-speed selector switch may also incorporate an "on/off' switch function to switch the unit off. The LTC over-ride switch may be designated as a "summer/winter switch", since the "summer" over-ride setting enables the fan to be operated when the central heating system is not operational, thus providing a room cooling function. A room thermostat control, arranged to activate the fan only upon room temperature falling below a pre-determined value, may also be provided.

The LTC sensor is preferably adapted to activate the fan when water temperature in the panel is substantially 45°C or higher, and to deactivate the fan when water temperature in the panel is substantially 40°C or lower. The LTC sensor is preferably attached via said magnetic attachment means to a bottom water header or a vertical water way of one of the radiator panels, at the rear face thereof.

The modular fan unit of the present invention is intended for retro-fitting to a conventional radiator of a pre-existing central heating installation. In order to facilitate this, the unit capable of being mounted under a single, double or treble panel radiator, either with or without internal fins.

Where the modular fan unit is to be mounted under a single radiator having a first panel, the housing is located such that the fan is arranged to drive air between said first panel and a wall on which said radiator is installed. Where the modular fan unit is to be mounted under a double radiator having first and second panels, the housing is located such that the fan is arranged to drive air between said first and second panels. Where the modular fan unit is to be mounted under a treble radiator having first, second and third panels, the housing is located such that the fan is arranged to drive air between said first and second panels, and/or between said second and third panels.

The fan may be adapted to operate on either a 12V or 230V electrical supply, with an appropriate transformer and/or mains plug being provided accordingly. The unit is preferably supplied with a heat resistant flex which may also comprise an in-line master switch either in addition to, or instead of, the on/off switch function on the control panel.

The housing preferably has adjustable legs, adapted to adjust the height of the unit, thereby to facilitate mounting of said unit under radiators installed at varying heights above floor level. Each leg is preferably provided with a manually operable height adjustment screw, thereby to facilitate said height adjustment. In use, the modular fan unit is mounted under a radiator such that an air gap of at least 1.5mm, and preferably substantially 1.5mm, is provided between said modular fan unit and said radiator.

According to a second aspect of the present invention there is provided a modified radiator, having a modular fan unit as hereinbefore described mounted thereunder, thereby to modify said radiator so as to enable boosting of natural convection.

According to a third aspect of the present invention there is provided a method of modifying a conventional radiator so as to enable boosting of natural convection, said method comprising mounting a modular fan unit as hereinbefore described under said radiator.

The present invention thus provides a simple "retro-fit" modular fan unit for modifying a conventional radiator so as to boost natural convection. This enables energy saving by running at a lower water temperature than that of a standard radiator. The unit is provided as a "plug and play" system, which can be fitted in place under the conventional radiator, without the need for a plumber or an electrician to carry out the installation, and without the need for any specialist DIY skill, knowledge or experience. The modular unit will be supplied sealed closed, with no serviceable part. The modular unit will be sized for mounting under standard 0.6m (2ft) or 1.2m (4ft) sizes of radiator, but can be doubled up for longer panel radiators, if required. Once the modular unit is installed under a radiator, the thus modified radiator will have an appearance largely indistinguishable from that of a conventional radiator, thus minimising the aesthetic impact of installation of the modular unit.

In order that the present invention may be more clearly understood, preferred embodiments thereof will now be described in detail, though only by way of example, with reference to the accompanying drawings, in which:
Figure 1 is a front view of a modular fan unit according to the present invention;
Figure 2 is a front view of a typical panel of a conventional radiator under which the modular fan unit of Figure 1 is to be installed;
Figure 2a is an enlarged detail of the radiator panel of Figure 2;
Figure 2b is a side view of the radiator panel of Figure 2;
Figure 3 is an enlarged detail side view showing the modular fan unit of Figure 1 mounted under a conventional radiator;
Figures 4a to 4f are side views showing the modular fan unit of Figure 1 mounted under a series of conventional radiators of differing configurations;
Figure 5 is a front view showing the modular fan unit of Figure 1 mounted under a conventional radiator; and
Figure 5a is a detail side view of the radiator and fan unit arrangement of Figure 5.

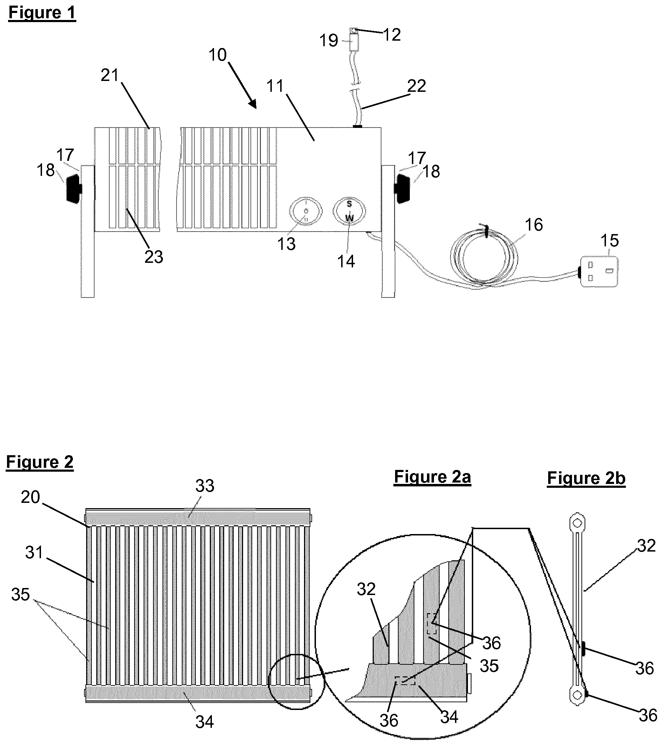

Referring first to Figure 1, there is shown a modular fan unit, generally indicated 10, according to the present invention. The unit 10 comprises a plastic housing 11 having an electric fan (not visible) housed therein, and arranged to drive air in through a front grille 23 and out through a top grille 21 provided in the upper surface of the housing 11. A low temperature cut-out (LTC) thermistor sensor 12 is provided externally of the housing 11, and communicates via a wire 22 with control means adapted to control the operation of the fan. The LTC thermistor sensor 12 is provided with magnetic attachment means 19 to enable the sensor 12 to be attached to a radiator panel 20.

The control means comprise a multi-speed selector "boost" switch 13 and an LTC over-ride "summer/winter" switch 14. The boost switch 13 also incorporates an on/off function. A standard 3-pin plug 15 is connected to the unit 10 via a 3-metre heat resistant flex 16.

The housing 11 is provided with adjustable legs 17 at either end thereof. Each leg 17 has a manually operable height adjustment screw 18 to enable the height of the unit 10 to be varied according to the height of radiator under which the unit 10 is to be mounted.

Referring now to Figure 2, there is shown a typical panel 20 of a conventional radiator, under which the modular fan unit 10 is to be mounted. The panel 20 has a front face 31, a rear face 32, a top water header 33, a bottom water header 34 and a plurality of vertical water ways 35. As is shown in Figures 2a and 2b, the preferred attachment locations 36 for the magnetic attachment means 19 of the LTC sensor 12 are on the rear face 32 of the panel 20, on the bottom water header 34 or a vertical water way 35.

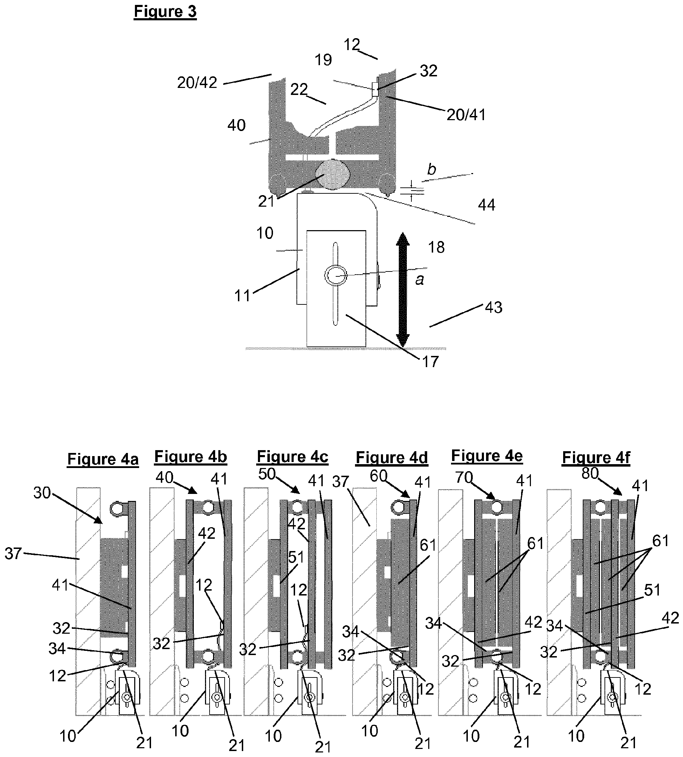

Referring now to Figure 3, there is shown the modular fan unit 10 mounted under a conventional double panel radiator 40, having a first panel 41 and a second panel 42. As can be seen, the LTC sensor 12 is attached, via the magnetic attachment means 19, to the rear face 32 of the first panel 41. The unit 10 is placed under the radiator 40 with its legs 17 on the floor 43 of the room in which the radiator is installed, with an air gap 44 between the top grille 21 of the unit 10, and the bottom of the radiator 40. Using the manually operable height adjustment screws 18, the height of the unit 10 can then be varied, as indicated by arrows a until the air gap 44 is substantially 1.5mm, as indicated by arrows b. The unit 10 is positioned such that air expelled from the top grille 21 is driven between the first and second panels, 41, 42.

Referring now to Figures 4a to 4f, there is shown the modular fan unit 10 mounted under a series of conventional radiators of differing configurations, in order to illustrate the preferred location of the LTC sensor 12, and the preferred mounting position of the unit 10, for each configuration of radiator.

Figure 4a shows the modular fan unit 10 mounted under a single panel radiator 30 having a first panel 41. The LTC sensor 12 is attached to the rear face 32 of the first panel 41, on the bottom water header 34. The unit 10 is positioned such that air expelled from the top grille 21 is driven between the first panel 41 and the wall 37 on which the radiator 30 is installed.

Figure 4b shows the modular fan unit 10 mounted under a double panel radiator 40 having a first panel 41 and a second panel 42. Here, the LTC sensor 12 is attached to the rear face 32 of the first panel 41, on a vertical water way 35. The unit 10 is positioned such that air expelled from the top grille 21 is driven between the first panel 41 and the second panel 42.

Figure 4c shows the modular fan unit 10 mounted under a treble panel radiator 50 having a first panel 41, a second panel 42, and a third panel 51. Here, the LTC sensor 12 is attached to the rear face 32 of the second panel 42, on a vertical water way 35. The unit 10 is positioned such that air expelled from the top grille 21 is driven between the second panel 42 and the third panel 51.

Figure 4d shows the modular fan unit 10 mounted under a single panel convector radiator 60 having a first panel 41 provided with fins 61. The LTC sensor 12 is attached to the rear face 32 of the first panel 41, on the bottom water header 34. The unit 10 is positioned such that air expelled from the top grille 21 is driven between the first panel 41 and the wall 37.

Figure 4e shows the modular fan unit 10 mounted under a double panel convector radiator 70 having a first panel 41 and a second panel 42, each provided with fins 61. The LTC sensor 12 is again attached to the rear face 32 of the first panel 41, on the bottom water header 34. The unit 10 is positioned such that air expelled from the top grille 21 is driven between the first panel 41 and the second panel 42.

Figure 4f shows the modular fan unit 10 mounted under a treble panel convector radiator 80 having a first panel 41, a second panel 42, and a third panel 51, each provided with fins 61. The LTC sensor 12 is attached to the rear face 32 of the second panel 42, again on the bottom water header 34. The unit 10 is positioned such that air expelled from the top grille 21 is driven between the second panel 42 and the third panel 51.

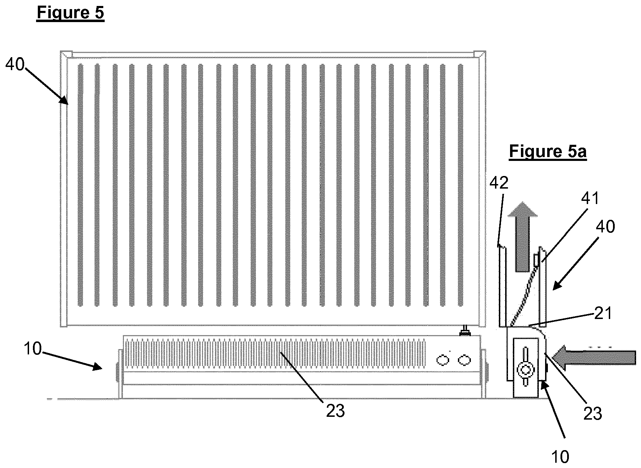

Finally, referring to Figure 5, this shows the unit 10 mounted in position under a radiator, in this case a double panel radiator 40. As illustrated in Figure 5a, the unit 10 draws in air through the front grille 23 and expels it through the top grille 21, thus driving the air between the first and second panels 41, 42 of the radiator 40.

In tests, the modular fan unit of the present invention has been found to be capable of heating a 15m³ room from 18°C to 21°C in 9.5 minutes. This compares to a conventional radiator, which was found to take 32 minutes.

## Claims

1. A modular fan unit (10), adapted to be mounted under a radiator having one or more panels, said fan unit comprising:
- a housing (11), adapted to be located under said radiator;
- an electric fan provided within the housing and arranged to drive air upwards over said one or more panels;
- a low temperature cut-out (LTC) sensor (12) having attachment means (19) adapted to be attached to one of said panels, and adapted to activate the fan only upon water temperature in said panel reaching a pre-determined value; and
- control means arranged to operate the fan,
the modular fan unit being **characterized in that** the LTC sensor (12) is provided externally of the housing (11) and communicates via a wire (22) with said control means, the attachment means (19) are magnetic attachment means, and the control means comprises a LTC over-ride switch (14) provided on the housing (11) and adapted to enable operation of the fan when water temperature in said panel is below said pre-determined value.

2. A modular fan unit as claimed in claim 1, wherein the LTC sensor comprises a thermistor.

3. A modular fan unit as claimed in claim 1 or claim 2, wherein the control means further comprises:
- a multi-speed selector switch (13) provided on the housing and adapted to enable operation of the fan at one or more speeds;
and/or
- a room thermostat control arranged to activate the fan only upon room temperature falling below a pre-determined value.

4. A modular fan unit as claimed in any of the preceding claims, wherein the fan is adapted to operate on a 12V electrical supply or a 230V electrical supply.

5. A modular fan unit as claimed in any of the preceding claims, wherein the LTC sensor is adapted to activate the fan when water temperature in said panel is substantially 45°C or higher.

6. A modular fan unit as claimed in claim 5, wherein the LTC sensor is adapted to deactivate the fan when water temperature in said panel is substantially 40°C or lower.

7. A modular fan unit as claimed in any of the preceding claims, wherein the housing has adjustable legs (17) adapted to adjust the height of the unit, thereby to facilitate mounting of said unit under radiators installed at varying heights above floor level, and wherein each leg is provided with a manually operable height adjustment screw (18), thereby to facilitate said height adjustment.

8. A modular fan unit as claimed in any of the preceding claims, wherein said housing is formed from plastics material and remains at ambient temperature during operation of the unit.

9. A modified radiator having one or more panels each having a front face (31) and a rear face (32), and wherein a modular fan unit as claimed in any of the preceding claims is mounted thereunder, thereby to modify said radiator so as to enable boosting of natural convection.

10. A modified radiator as claimed in claim 9, wherein the modular fan unit is mounted thereunder such that an air gap (44) of at least 1.5mm is provided between said modular fan unit and said radiator.

11. A modified radiator as claimed in claim 9 or claim 10, wherein said one or more panels each has a top water header (33), a bottom water header (34) and vertical water ways (35), and wherein said LTC sensor is attached via said magnetic attachment means to a bottom water header or a vertical water way of one of said panels, at the rear face thereof.

12. A modified radiator as claimed in any of claims 9 to 11, wherein said modified radiator is a single radiator having a first (41) panel, and wherein the modular fan unit is mounted thereunder such that the fan is arranged to drive air between said first panel and a wall on which said radiator is installed.

13. A modified radiator as claimed in any of claims 9 to 11, wherein said modified radiator is a double panel radiator having first (41) and second panels (42), and wherein the modular fan unit is mounted thereunder such that the fan is arranged to drive air between said first and second panels.

14. A modified radiator as claimed in any of claims 9 to 11, wherein said modified radiator is a treble panel radiator having first (41), second (42) and third (51) panels, and wherein the modular fan unit is mounted thereunder such that the fan is arranged to drive air between said first and second panels, and/or between said second and third panels.

15. A method of modifying a radiator so as to enable boosting of natural convection, said method being **characterized in that** it comprises mounting a modular fan unit as claimed in any of claims 1 to 8 under said radiator, thereby to provide a modified radiator as claimed in any of claims 9 to 14.

## Patentansprüche

1. Modulare Gebläseeinheit (10), die zur Montage unter einem Heizkörper mit einer oder mehreren Platten ausgestaltet ist, wobei die Gebläseeinheit aufweist:
- ein Gehäuse (11), das dazu ausgestaltet ist, um unter dem Heizkörper untergebracht zu sein,
- ein elektrisches Gebläse, das innerhalb des Gehäuses vorgesehen ist und dazu ausgestaltet ist, um Luft nach oben entlang der einen oder mehreren Platten zu fördern,
- einen temperaturbegrenzenden (LTC) Sensor (12) mit einer Befestigungseinrichtung (19), der dazu ausgestaltet ist, an einer der Platten angebracht zu werden, und dazu ausgestaltet ist, das Gebläse nur dann zu aktivieren, wenn die Wassertemperatur in der Platte einen vorbestimmten Wert erreicht, und
- einer Steuereinrichtung, die zum Betreiben des Gebläses eingerichtet ist,
wobei die modulare Gebläseeinheit **dadurch gekennzeichnet ist, dass** der LTC-Sensor (12) außerhalb des Gehäuses (11) vorgesehen ist und über eine Leitung (22) mit der Steuereinrichtung kommuniziert, dass die Befestigungseinrichtung (19) eine magnetische Befestigungseinrichtung ist und dass die Steuereinrichtung einen an dem Gehäuse (11) vorgesehenen LTC-Überbrückungsschalter aufweist, der dazu ausgestaltet ist, den Betrieb des Gebläses zu ermöglichen, wenn die Wassertemperatur in der Platte unterhalb des vorbestimmten Wertes ist.

2. Modulare Gebläseeinheit wie in Anspruch 1 beansprucht, wobei der LTC-Sensor einen Thermistor aufweist.

3. Modulare Gebläseeinheit wie in Anspruch 1 oder Anspruch 2 beansprucht, wobei die Steuereinrichtung weiterhin aufweist:
- einen Geschwindigkeitsauswahlschalter (13), der an dem Gehäuse vorgesehen ist und dazu eingerichtet ist, um den Betrieb des Gebläses bei einer oder mehreren Geschwindigkeiten zu ermöglichen, und/oder
- eine Raumthermostatsteuerung, die dazu eingerichtet ist, das Gebläse nur dann zu aktivieren, wenn die Raumtemperatur unter einen vorbestimmten Wert fällt.

4. Modulare Gebläseeinheit wie in einem der vorhergehenden Ansprüche beansprucht, wobei das Gebläse dazu eingerichtet ist, um mit einer elektrischen Versorgung von 12 Volt oder einer elektrischen Versorgung von 230 Volt zu arbeiten.

5. Modulare Gebläseeinheit wie in einem der vorhergehenden Ansprüche beansprucht, wobei der LTC-Sensor dazu eingerichtet ist, das Gebläse zu aktivieren, wenn die Wassertemperatur in der Platte im Wesentlichen 45°C oder höher ist.

6. Modulare Gebläseeinheit wie in Anspruch 5 beansprucht, wobei der LTC-Sensor dazu eingerichtet ist, das Gebläse zu deaktivieren, wenn die Wassertemperatur in der Platte im Wesentlichen 40°C oder niedriger ist.

7. Modulare Gebläseeinheit wie in einem der vorhergehenden Ansprüche beansprucht, wobei das Gehäuse einstellbare Füße (17) aufweist, die dazu ausgestaltet sind, um die Höhe der Einheit einzustellen, um dadurch die Anbringung der Einheit unter Heizkörpern zu ermöglichen, die in unterschiedlichen Höhen oberhalb des Fußbodenniveaus installiert sind, und wobei jeder Fuß mit einer manuell zu betätigenden Höheneinstellschraube (18) versehen ist, um dadurch die Höheneinstellung zu ermöglichen.

8. Modulare Gebläseeinheit wie in einem der vorhergehenden Ansprüche beansprucht, wobei das Gehäuse aus Kunststoffmaterial hergestellt ist und während des Betriebs der Einheit auf Umgebungstemperatur bleibt.

9. Modifizierter Heizkörper mit einer oder mehreren Platten, die jeweils eine Vorderfläche (31) und eine Rückfläche (32) aufweisen, und wobei eine modulare Gebläseeinheit wie in einem der vorhergehenden Ansprüche beansprucht darunter angebracht ist, um dadurch den Heizkörper zu modifizieren, um so eine Verstärkung der natürlichen Konvektion zu ermöglichen.

10. Modifizierter Heizkörper wie in Anspruch 9 beansprucht, wobei die modulare Gebläseeinheit darunter angebracht ist, um so eine Luftlücke (44) von wenigstens 1,5 mm zwischen der modularen Gebläseeinheit und dem Heizkörper zu lassen.

11. Modifizierter Heizkörper wie in Anspruch 9 oder Anspruch 10 beansprucht, wobei die eine oder die mehreren Platten jeweils eine obere Wassersammelleitung (33), eine untere Wassersammelleitung und vertikale Wasserleitungen (35) aufweist und wobei der LTC-Sensor mit der magnetischen Befestigungseinrichtung an der unteren Wassersammelleitung oder einer vertikalen Wasserleitung von einer der Platten an deren Rückfläche befestigt ist.

12. Modifizierter Heizkörper wie in einem der Ansprüche 9 bis 11 beansprucht, wobei der modifizierte Heizkörper ein einzelner Heizkörper mit einer ersten Platte (41) ist und wobei die modulare Gebläseeinheit darunter angebracht ist, so dass das Gebläse dazu angeordnet ist, um Luft zwischen der ersten Platte und einer Wand zu fördern, an der der Heizkörper montiert ist.

13. Modifizierter Heizkörper wie in einem der Ansprüche 9 bis 11 beansprucht, wobei der modifizierte Heizkörper ein Doppelplatten-Heizkörper mit einem ersten Heizkörper (41) und einem zweiten Heizkörper (42) ist und wobei die modulare Gebläseeinheit darunter angebracht ist, so dass das Gebläse dazu angeordnet ist, um Luft zwischen der ersten und der zweiten Platte zu fördern.

14. Modifizierter Heizkörper wie in einem der Ansprüche 9 bis 11 beansprucht, wobei der modifizierte Heizkörper ein Dreiplatten-Heizkörper mit einem ersten (41), einem zweiten (42) und einem dritten Heizkörper (51) ist und wobei die modulare Gebläseeinheit darunter angebracht ist, so dass das Gebläse dazu angeordnet ist, um Luft zwischen den ersten und zweiten Platten und/oder zwischen den zweiten und dritten Platten zu fördern.

15. Verfahren zum Modifizieren eines Heizkörpers, um so eine Stärkung der natürlichen Konvektion zu ermöglichen, wobei das Verfahren **dadurch gekennzeichnet ist, dass** es die Anbringung einer modularen Gebläseeinheit wie in einem der Ansprüche 1 bis 8 beansprucht unter dem Heizkörper beinhaltet, um dadurch einen modifizierten Heizkörper wie in einem der Ansprüche 9 bis 14 beansprucht bereitzustellen.

## Revendications

1. Unité (10) de ventilateur modulaire, adaptée pour être montée sous un radiateur ayant un ou plusieurs panneaux, ladite unité de ventilateur comprenant :
- un boitier (11), adapté pour être placé sous ledit radiateur ;
- un ventilateur électrique prévu à l'intérieur du boitier et agencé pour entrainer de l'air vers le haut sur lesdits un ou plusieurs panneaux ;
- un capteur (12) de coupure à basse température (LTC) ayant des moyens de fixation (19) adapté pour être fixé à l'un desdits panneaux, et adapté pour activer le ventilateur uniquement lorsque la température de l'eau dans ledit panneau atteint une valeur prédéterminée ; et
- des moyens de commande agencés pour faire fonctionner le ventilateur,
l'unité de ventilateur modulaire étant **caractérisée en ce que** le capteur LTC (12) est prévu à l'extérieur du boitier (11) et communique avec lesdits moyens de commande par un fil (22), les moyens de fixation (19) sont des moyens de fixation magnétiques, et les moyens de commande comprennent un interrupteur de neutralisation LTC (14) prévu sur le boitier (11) et adapté pour permettre le fonctionnement du ventilateur lorsque la température de l'eau dans ledit panneau est inférieure à ladite valeur prédéterminée.

2. Unité de ventilateur modulaire selon la revendication 1, le capteur LTC comprenant une thermistance.

3. Unité de ventilateur modulaire selon la revendication 1 ou 2, les moyens de commande comprenant en outre :
- un sélecteur multi-vitesses (13) prévu sur le boitier et adapté pour permettre le fonctionnement du ventilateur à une ou plusieurs vitesses ; et/ou
- une commande de thermostat d'ambiance adaptée pour activer le ventilateur uniquement lorsque la température ambiante descend en dessous d'une valeur prédéterminée.

4. Unité de ventilateur modulaire selon l'une quelconque des revendications précédentes, le ventilateur étant adapté pour fonctionner sur une alimentation électrique de 12 V ou une alimentation électrique de 230 V.

5. Unité de ventilateur modulaire selon l'une quelconque des revendications précédentes, le capteur LTC étant adapté pour activer le ventilateur lorsque la température de l'eau dans ledit panneau est sensiblement de 45°C ou plus.

6. Unité de ventilateur modulaire selon la revendication 5, le capteur LTC étant adapté pour désactiver le ventilateur lorsque la température de l'eau dans ledit panneau est sensiblement de 40°C ou moins.

7. Unité de ventilateur modulaire selon l'une quelconque des revendications précédentes, le boitier ayant des pieds réglables (17) adaptés pour régler la hauteur de l'unité, pour ainsi faciliter le montage de ladite unité sous des radiateurs installés à différentes hauteurs au-dessus du niveau du sol, et chaque pied étant muni d'une vis de réglage d'hauteur (18) pouvant être actionnée manuellement, pour ainsi faciliter ledit réglage d'hauteur.

8. Unité de ventilateur modulaire selon l'une quelconque des revendications précédentes, ledit boitier étant formé de matière plastique et restant à température ambiante pendant le fonctionnement de l'unité.

9. Radiateur modifié ayant un ou plusieurs panneaux ayant chacun une face avant (31) et une face arrière (32), et une unité de ventilateur modulaire selon l'une quelconque des revendications précédentes étant montée en dessous de celui-ci, pour ainsi modifier ledit radiateur pour permettre le renforcement de la convection naturelle.

10. Radiateur modifié selon la revendication 9, l'unité de ventilateur modulaire étant montée en dessous de celui-ci de façon à prévoir un entrefer (44) d'au moins 1,5 mm entre ladite unité de ventilateur modulaire et ledit radiateur.

11. Radiateur modifié selon la revendication 9 ou 10, ledit un ou plusieurs panneaux ayant chacun un collecteur d'eau supérieur (33), un collecteur d'eau inférieur (34) et des voies d'eau verticales (35), et ledit capteur LTC étant fixé par lesdits moyens de fixation magnétiques à un collecteur d'eau inférieur ou une voie d'eau verticale d'un desdits panneaux, à sa face arrière.

12. Radiateur modifié selon l'une quelconque des revendications 9 à 11, ledit radiateur modifié étant un radiateur unique ayant un premier panneau (41), et l'unité de ventilateur modulaire étant montée en dessous de celui-ci de façon à ce que le ventilateur est agencé pour entrainer de l'air entre ledit premier panneau et une paroi sur laquelle ledit radiateur est installé.

13. Radiateur modifié selon l'une quelconque des revendications 9 à 11, ledit radiateur modifié étant un radiateur double panneaux ayant des premiers (41) et deuxièmes (42) panneaux, et l'unité de ventilateur modulaire étant montée en dessous de celui-ci de façon à ce que le ventilateur est agencé pour entrainer de l'air entre lesdits premiers et deuxièmes panneaux.

14. Radiateur modifié selon l'une quelconque des revendications 9 à 11, ledit radiateur modifié étant un radiateur triple panneau ayant des premiers (41), deuxièmes (42) et troisièmes (51) panneaux, et l'unité de ventilateur modulaire étant montée en dessous de celui-ci de façon à ce que le ventilateur est agencé pour entrainer de l'air entre lesdits premiers et deuxièmes panneaux, et/ou entre lesdits deuxièmes et troisièmes panneaux.

15. Procédé pour modifier un radiateur pour permettre le renforcement de la convection naturelle, ledit procédé étant **caractérisé en ce qu'**il comprend le montage d'une unité de ventilateur modulaire selon l'une quelconque des revendications 1 à 8 sous ledit radiateur, pour ainsi fournir un radiateur modifié selon l'une quelconque des revendications 9 à 14.
